# EUROPEAN PATENT APPLICATION

(11) **EP 4 708 506 A1**
(43) Date of publication of application: **11.03.2026**
(21) Application number: 25198012.4
(22) Date of filing: 26.08.2025
(51) Int. Cl.: H01M 50/242, H01M 50/249, H01M 50/289

(54) **BATTERY MODULE, BATTERY MOUNTING STRUCTURE FOR VEHICLE, AND VEHICLE**

(30) Priority: 06.09.2024 JP 2024154074
(71) Applicant: MAZDA MOTOR CORPORATION, Hiroshima 730-8670 (JP)
(72) Inventor: NAKAGAWA, Kohya, Aki-gun, Hiroshima, 730-8670 (JP); KAWAMURA, Chikara, Aki-gun, Hiroshima, 730-8670 (JP)
(74) Representative: Müller-Boré & Partner Patentanwälte PartG mbB

(57) **Abstract**

A battery module 10 mounted on a vehicle body 1 includes a battery casing 21, a plurality of cells 22 disposed in series in a vehicle front-rear direction, a support portion 23 for supporting each of the plurality of cells 22, and a partition portion 24 disposed between the adjacent cells 22. When support rigidity of the support portion 23 is y [N/m], mass of each of the cells 22 is m [kg], a value of tan δ as a loss factor of the support portion 23 is x, and a minimum value yₘᵢₙ of y is yₘᵢₙ = 5.184 x 10⁹ (1/x)²(1/m)³, a maximum value yₘₐₓ of y is yₘₐₓ = 482.2531x²m⁵, and yₘᵢₙ < yₘₐₓ, y is set in a range of yₘᵢₙ ≤ y ≤ yₘₐₓ.

## Description

### [Technical Field]

The present invention relates to a battery module, a battery mounting structure for a vehicle or an electric vehicle, and a vehicle.

### [Background Art]

Conventionally, in an electric vehicle in which a battery module having a plurality of cells accommodated in a battery casing is mounted on a vehicle body, the plurality of cells in the battery casing individually vibrates in an up-down direction by vibration input to the vehicle body from a suspension or the like that supports a wheel during travel of a vehicle, and the vibration is transmitted to the cabin. This results in noise, vibration, or harshness (roughness, non-comfort) that affects ride comfort in the cabin. Therefore, in the electric vehicle, improvement in NVH performance, which is performance for reducing these noise, vibration, and harshness, is a problem.

Therefore, in order to improve the NVH performance, in the structure described in Patent Literature 1, the battery casing includes a pair of side plates having a C-shaped cross section so as not to vibrate the plurality of cells in the battery module in the up-down direction. Each of the paired side plates has an upper flange portion and a lower flange portion that support the cells from both upper and lower sides. The pair of side plates having the C-shaped cross section collectively restrains left and right sides of the plurality of cells. In this way, the upper and lower flange portions suppress the vibration of each of the cells in the up-down direction, and the NVH performance is thereby improved.

### [Citation List]

### [Patent Literature]

[Patent Literature 1] JP2023-46644A

### [Summary]

### [Technical Problem]

However, in the above structure, the pair of side plates having the C-shaped cross section collectively restrains the left and right sides of the plurality of cells, and the upper and lower flange portions thereby suppress the vibration of each of the cells in the up-down direction. However, an influence on the vibration caused by resonance of each of the cells during the travel of the vehicle is not taken into consideration, and there is room for improvement in the NVH performance.

The invention has been made in view of the above-described circumstance, and therefore has an object of improving NVH performance.

### [Solution to Problem]

The above problem is solved by a battery module or a battery mounting structure according to the invention as defined by the independent claims. Particularly, a battery mounting structure for a vehicle or an electric vehicle includes: a vehicle body; at least one battery module fixed to the vehicle body; and a pair of left and right front wheels attached or rotatably attached to both left and right sides of a front portion of the vehicle body. The front wheels may be attached in a freely rotatable manner. The battery module includes: a battery casing; a plurality of cells accommodated in the battery casing and disposed in series in a predetermined direction; and a support portion disposed in the battery casing and supports each of the plurality of cells. The battery module may further include a partition portion disposed between the adjacent cells and supported by the battery casing. When support rigidity of the support portion is y [N/m], mass of the cell is m [kg], a value of tan δ as a loss factor of the support portion is x, a minimum value yₘᵢₙ of y is yₘᵢₙ = 5.184 x 10⁹(1/x)²(1/m)³, a maximum value yₘₐₓ of y is yₘₐₓ = 482.2531 x²m⁵, and yₘᵢₙ < yₘₐₓ, y is set in a range of yₘᵢₙ ≤ y ≤ yₘₐₓ. The support rigidity may be a tensional rigidity and/or a shear rigidity.

According to such a configuration, a vibration wave input to the vehicle body from the pair of left and right front wheels during travel of the electric vehicle is transmitted to the battery module fixed to the vehicle body. At the time, in the battery module, an elastic wave is sequentially transmitted to the plurality of cells aligned in the predetermined direction via the support portion. In the above configuration, when the support rigidity y of the support portion satisfies the above condition, the plurality of cells resonates with each other, thereby interferes with the elastic wave, and reduces the elastic wave.

In other words, in a frequency band of the vibration input to the vehicle body during the travel of the vehicle, dissipation and interference of vibration energy occur with respect to the vibration sequentially transmitted for each of the cells in series in the predetermined direction. That is, a vibration damping effect by so-called meta-damping for continuously damping the vibration along a transmission direction of the vibration by using the mass of the two or more cells arranged in series and the loss factor or a damping characteristic of the support portion.

Just as described, NVH performance of the vehicle can be improved by effectively blocking the vibration input from the front wheels to the vehicle body by using the plurality of cells and the support portions and thereby suppressing the transmission into a cabin. Thus, it is possible to suppress the vibration at the frequency in a road noise band that is input to the vehicle body during the travel.

For example, in the case where the value of tan δ is x=2, and where the minimum value yₘᵢₙ of y is yₘᵢₙ = 1.296 x 10⁹(1/m)³, the maximum value yₘₐₓ of y is yₘₐₓ = 1.929 x 10³m⁵, and yₘᵢₙ < yₘₐₓ, y is preferably set in a range of yₘᵢₙ ≤ y ≤ yₘₐₓ .

According to such a configuration, when the value of the loss factor tan δ of the support portion is x=2, the range of the support rigidity y of the support portion, that is, the range between yₘᵢₙ and yₘₐₓ can be made the widest, and it is thus possible to suppress the vibration in the road noise band by selecting the support rigidity y from the wide range. As a result, a degree of freedom in design of the battery mounting structure is improved.

For example, the support portion preferably and collectively supports the plurality of cells joined to each other by a joint portion, rigidity of which is higher than rigidity of the support portion.

According to such a configuration, the plurality of cells joined to each other by the joint portion, the rigidity of which is higher than the rigidity of the support portion, is collectively supported by the support portion. In this way, even when the large number of cells is provided, the damping effect can reliably be exerted.

In the battery mounting structure for the electric vehicle, in a state of being sandwiched between the cell and the partition portion, the support portion preferably supports the cell.

In such a configuration, in the state of being sandwiched between the cell and the partition portion, the support portion can stably support the cell. As a result, the individual cells can reliably be resonated with the elastic wave, and the stable vibration suppressing effect can be exerted.

For example, in a state of being sandwiched between at least one of an upper surface and a lower surface of the cell and a top wall or a bottom wall of the battery casing, the support portion preferably supports the cell.

In such a configuration, in the state of being sandwiched between the cell and the top wall or the bottom wall of the battery casing, the support portion can stably support the cell. As a result, the individual cells can reliably be resonated with the elastic wave, and the stable vibration suppressing effect can be exerted.

For example, the cell and the partition portion are preferably integrally coupled, and in a state of being sandwiched between each of left and right end portions of the partition portion and a side wall of the battery casing, the support portion preferably supports the cell and the partition portion.

According to such a configuration, in the state of being sandwiched between each of the left and right end portions of the partition portion and the side wall of the battery casing, the support portion can stably support the cell and the partition portion. As a result, the individual cells coupled to the partition portion can reliably be resonated with the elastic wave, and the stable vibration suppressing effect can be exerted.

### [Advantageous Effects]

As it has been described so far, according to the battery mounting structure for the electric vehicle in the invention, the NVH performance can be improved.

### [Brief Description of Drawings]

[FIG. 1] FIG. 1 is a plan view illustrating an overall configuration of a vehicle lower portion of an electric vehicle, to which a battery mounting structure for an electric vehicle according to an embodiment of the invention is applied.
[FIG. 2] FIG. 2 is a cross-sectional view illustrating an internal configuration of a battery module in FIG. 1.
[FIG. 3] FIG. 3 is a three-dimensional graph illustrating a range having a maximum value yₘₐₓ and a minimum value yₘᵢₙ of support rigidity y with mass m of a cell of the battery module in FIG. 2, the support rigidity y of a support portion, and a loss factor tan δ of the support portion.
[FIG. 4] FIG. 4 is a graph of the cell mass m and the support rigidity y of the support portion illustrating the range of the maximum value yₘₐₓ and the minimum value yₘᵢₙ when the loss factor tan δ = 0.4 of the support portion in the graph of FIG. 2, and is a graph illustrating distribution of a combination (·) of the support rigidity and the cell mass included in the invention and a combination (x) in a comparative example.
[FIG. 5] FIG. 5 is a graph illustrating a relationship between the support rigidity/cell mass and a transfer function (FRF OA) illustrating a reduction in the transfer function due to a vibration damping effect in the combination (·) of the support rigidity and the cell mass included in the invention in FIG. 4.
[FIG. 6] FIG. 6 is a graph of the cell mass m and the support rigidity y of the support portion illustrating the range of the maximum value yₘₐₓ and the minimum value yₘᵢₙ when the loss factor tan δ = 1.0 of the support portion in the graph of FIG. 2, and is a graph illustrating the distribution of the combination (·) of the support rigidity and the cell mass included in the invention and the combination (x) in the comparative example.
[FIG. 7] FIG. 7 is a graph illustrating a relationship between the support rigidity/cell mass and the transfer function (FRF OA) illustrating the reduction in the transfer function due to the vibration damping effect in the combination (·) of the support rigidity and the cell mass included in the invention in FIG. 6.
[FIG. 8] FIG. 8 is a cross-sectional view schematically illustrating arrangement of the support portion in the battery module in FIG. 2.
[FIG. 9] FIG. 9 is a cross-sectional view illustrating an example of reducing the support portion in FIG. 8 as a modified example of the invention.
[FIG. 10] FIG. 10 is a cross-sectional view illustrating an example of supporting two integrated cells by two support portions at two front and rear positions as another modified example of the invention.
[FIG. 11] FIG. 11 is a cross-sectional view illustrating an example in which a large number of cylindrical cells, which is bonded to each other and integrated by a high-rigid adhesive (joint portion), is coupled to a partition portion via the support portion as further another modified example of the invention.
[FIG. 12] FIG. 12 is a cross-sectional view illustrating an example in which both upper and lower surfaces of the cell are coupled to a top wall and a bottom wall of the battery module via the support portion as further another modified example of the invention.
[FIG. 13] FIG. 13 is a cross-sectional view illustrating an example in which the cell that is integrated with the partition portion is coupled to side walls on both left and right sides of the battery module via the support portions on both left and right ends of the partition portion as further another modified example of the invention.
[FIG. 14] FIG. 14 is a chart schematically illustrating a meta-damping phenomenon, occurrence of which is desired in the battery mounting structure in the invention.
[FIG. 15] FIG. 15 is a chart schematically illustrating a resonance phenomenon as a comparative example with meta-damping.
[FIG. 16] FIG. 16 is a graph illustrating a relationship between a frequency and the transfer function for illustrating interruption of an elastic wave in a wide frequency range by meta-damping that occurs in the invention.
[FIG. 17] FIG. 17 is a graph illustrating a relationship between the frequency and the transfer function for illustrating dispersion of a resonance peak at a specific frequency by a dynamic vibration absorber as a comparative example with meta-damping.
[FIG. 18] FIG. 18 is a graph illustrating a relationship between the frequency and the transfer function for illustrating a reduction in the resonance peak at the specific frequency only by damping as the comparative example with meta-damping.

### [Description of Embodiments]

Hereinafter, a battery mounting structure for a vehicle or an electric vehicle according to an embodiment of the invention will be described in detail with reference to the drawings.

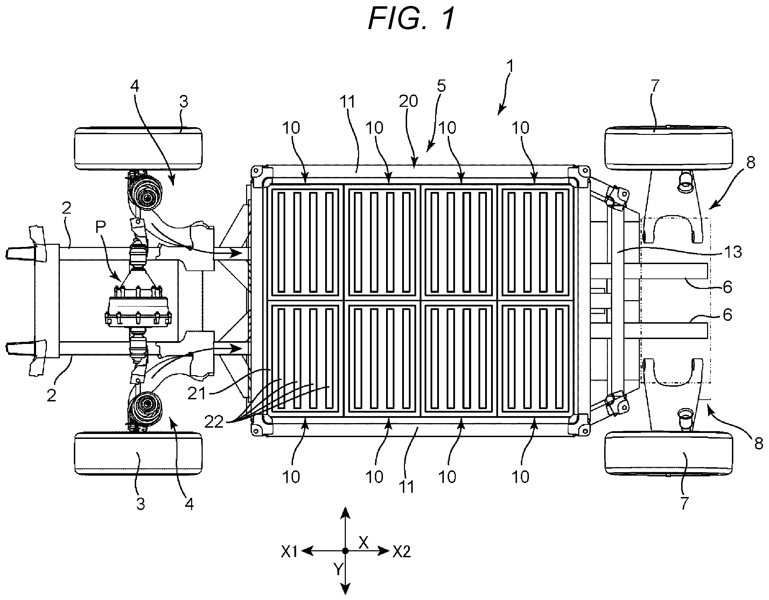

As illustrated in FIG. 1, a vehicle lower portion of the vehicle including a mounting structure of a battery as an embodiment of the invention may have a structure in which a casing 20 of a battery pack 5 is integrated with a vehicle body 1. Such a structure is a structure in which a battery module 10 is directly mounted on the vehicle body 1, and is referred to as a so-called skateboard structure. The vehicle may be an electric vehicle.

For example, as illustrated in FIG. 1, the vehicle, particularly the vehicle lower portion includes: the vehicle body 1 integrated with the casing 20; one or a plurality of (eight in FIG. 1) the battery modules 10 mounted on the casing 20 of the vehicle body 1; and a pair of left and right front wheels 3. The vehicle, particularly the vehicle lower portion may further include: a pair of left and right rear wheels 7; and a drive unit P that includes an electric motor for driving the pair of front wheels 3.

The battery pack 5 includes the plurality of battery modules 10 and the casing 20 that accommodates the battery modules 10. The plurality of battery modules 10 is individually fixed to the inside of the casing 20. At least one battery module 10 may be provided.

As illustrated in FIG. 1, the vehicle body 1 may include: a pair of front lower arms 2; a pair of front suspensions 4 respectively fixed to the pair of front lower arms 2 and respectively supporting the pair of front wheels 3 in a rotatable manner or a freely rotatable manner; the casing 20 of the battery pack 5 located on a vehicle rear side X2 of the pair of front lower arms 2; a pair of rear lower arms 6 located on the vehicle rear side X2 of the casing 20; a pair of rear suspensions 8 respectively fixed to the pair of rear lower arms 6 and respectively supporting the pair of rear wheels 7 in a rotatable manner or a freely rotatable manner; and/or a floor plate (not illustrated) covering an upper portion of the battery pack 5 and constituting a floor portion of a cabin.

The casing 20 of the battery pack 5 may include: a pair of left and right side members 11 separated from each other in a vehicle width direction Y and extending in a vehicle front-rear direction X; a front cross member 12 extending in the vehicle width direction Y and coupling front end portions of the pair of side members 11; and/or a rear cross member 13 extending in the vehicle width direction Y and coupling rear end portions of the pair of left and right side members 11.

Rear end portions of the pair of front lower arms 2 may be coupled to the front cross member 12. Front end portions of the pair of rear lower arms 6 may be coupled to the rear cross member 13.

In the present embodiment, as illustrated in FIG. 1, a group of the eight battery modules 10 in a plurality of rows, particularly two rows, is arranged to be separated from each other in the vehicle width direction Y. A plurality of battery modules 10, particularly the four battery modules 10, in each of the rows may be arranged at equally-spaced intervals in the vehicle front-rear direction X. The battery modules 10 may be arranged in one row.

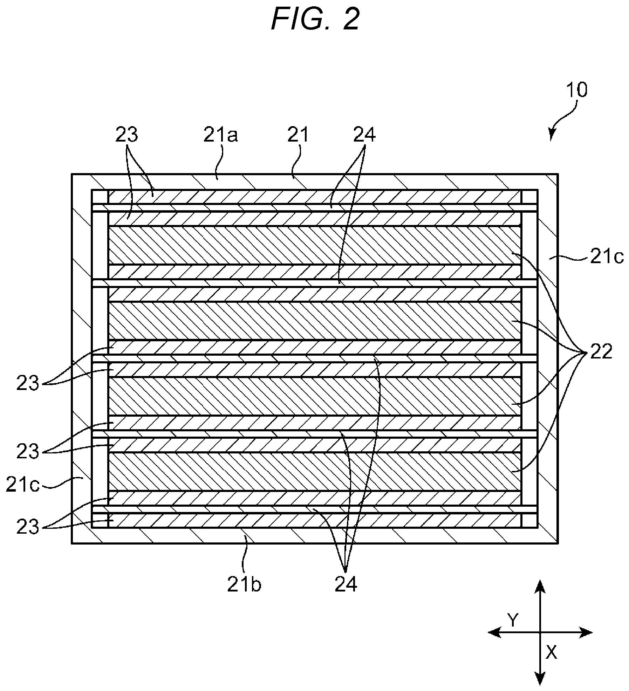

As illustrated in FIG. 2, each of the battery modules 10 includes: a battery casing 21; a plurality of cells 22 arranged side by side in the vehicle front-rear direction X (predetermined direction) accommodated in the battery casing 21; one or a plurality of support portions 23 respectively supporting the plurality of cells 22; and optionally, one or a plurality of partition portions 24 partitioning between the adjacent cells 22. Here, the plurality of cells 22 only needs to be aligned in a predetermined direction, and is not limited to the vehicle front-rear direction.

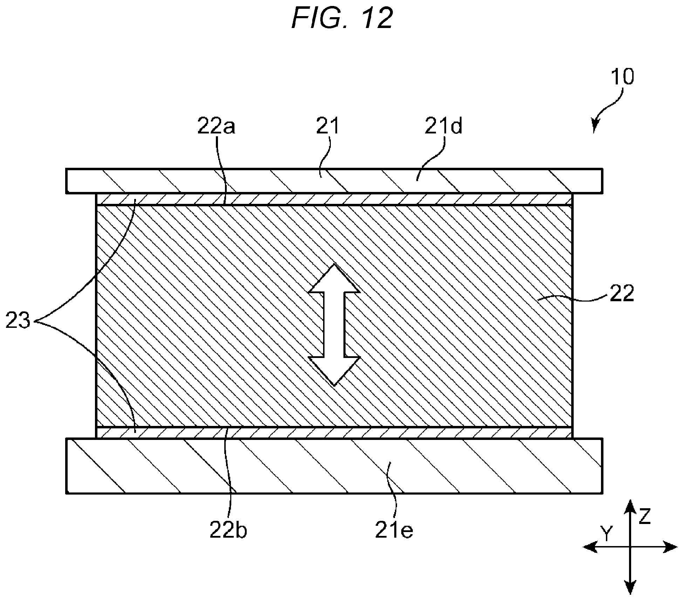

The battery casing 21 may be a rectangular parallelepiped hollow casing, and particularly, has: a front wall 21a extending in the vehicle width direction Y; a rear wall 21b extending in the vehicle width direction Y so as to be parallel to the front wall 21a on the vehicle rear side of the front wall 21a; a pair of left and right side walls 21c coupling both left and right end portions of the front wall 21a and the rear wall 21b and extending in the vehicle front-rear direction X; and/or a top wall 21d and a bottom wall 21e spaced apart in an up-down direction Z illustrated in FIG. 12.

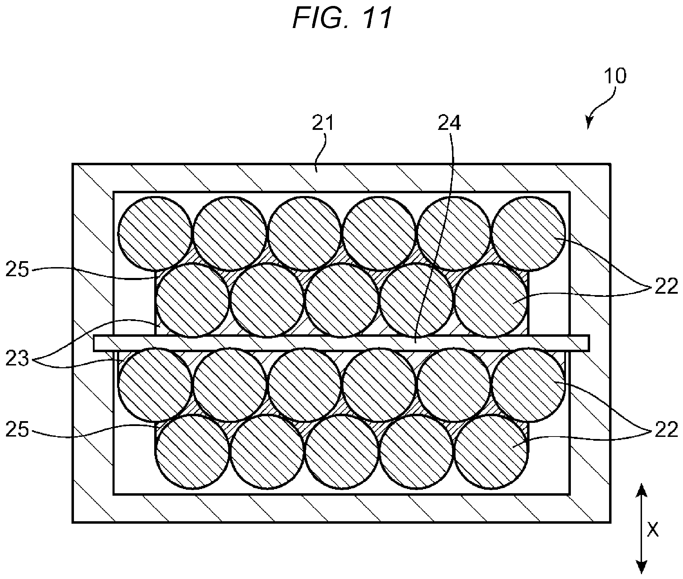

The cell 22 may be a secondary battery such as a lithium-ion battery, and may have a plate shape or a thin-bag (pouch) shape, but may have a cylindrical shape like the cell 22 in FIG. 11 described below. The plurality of plate-shaped cells 22 may be arranged in the vehicle front-rear direction X so as to be parallel to each other, that is, to extend in the vehicle width direction Y.

For example, the partition portion 24 is a plate-shaped portion extending in the vehicle width direction Y and disposed between the two adjacent cells 22, and left and right end portions are fixed to the side walls 21c of the battery casing 21, respectively.

The support portion 23 may be disposed in the battery casing 21 and individually supports the cells 22. The support portion 23 illustrated in FIG. 2 may individually support the cells 22 in a state of being sandwiched between the cell 22 and the partition portion 24.

As the support portion 23, a damping adhesive made of a polymer material or the like is used, for example, is a sealer or a rubber-based adhesive, and a polymer adhesive having a vibration damping characteristic due to the Young's modulus at a temperature of 20°C of 500 Mpa or less and a loss factor of 0.1 or greater, or the like may be used. In particular, in the present embodiment, the cell 22 is bonded to the partition portion 24 by the support portion 23 made of the polymer adhesive or the like.

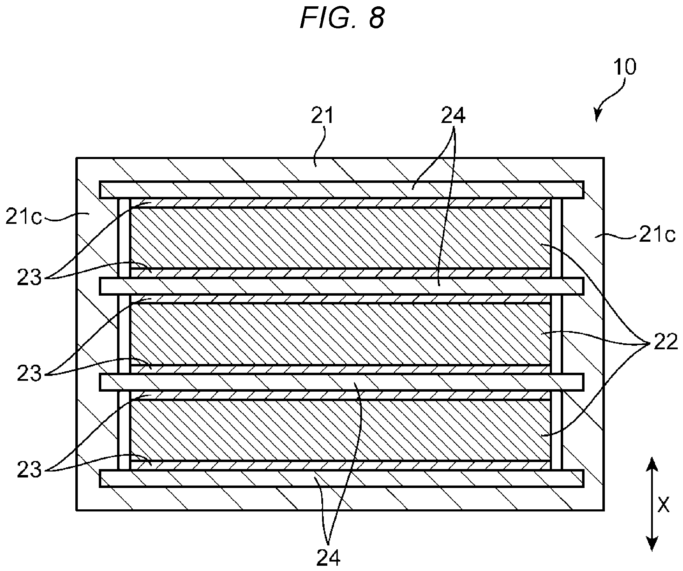

As illustrated in FIGs. 2 and 8, in the present embodiment, the support portion 23 made of the polymer adhesive or the like adheres both front and rear surfaces of each of the cells 22 to the partition portion 24 adjacent to each other. For example, as illustrated in FIG. 2, the support portion 23 may be disposed on both sides in the vehicle front-rear direction X of each of the partition portions 24 in the foremost portion and the rearmost portion.

In the present embodiment, for example, the support portion 23 supports the cell 22 in the state of being sandwiched between the cell 22 and the partition portion 24. In this way, the support portion 23 can stably support the cell 22. Thus, the individual cells 22 can reliably be resonated with an elastic wave, and a stable vibration suppressing effect can thereby be exhibited.

### (Description on Setting of Support Rigidity y)

In the battery mounting structure in the present embodiment, as illustrated in FIGs. 1 to 2, in a configuration that the battery module 10 has the plurality of cells 22 and the plurality of support portions 23 for individually supporting the plurality of cells 22, the support rigidity y of each of the support portions 23 is set as follows.

First, when the support rigidity of the support portion 23 is y [N/m], mass of each of the cells 22 is m [kg], a value of tan δ as the loss factor of the support portion 23 is x, and a minimum value yₘᵢₙ of y is yₘᵢₙ = 5.184 x 10⁹(1/x)²(1/m)³, and a maximum value yₘₐₓ of y is yₘₐₓ = 482.2531x²m⁵, and yₘᵢₙ < yₘₐₓ, y is set in a range of yₘᵢₙ ≤ y ≤ yₘₐₓ. The support rigidity may be a tensional rigidity and/or a shear rigidity.

Conditions of the loss factor tan δ and the support rigidity y in the present embodiment may be the loss factor and the support rigidity at 10 to 60°C and 100 Hz.

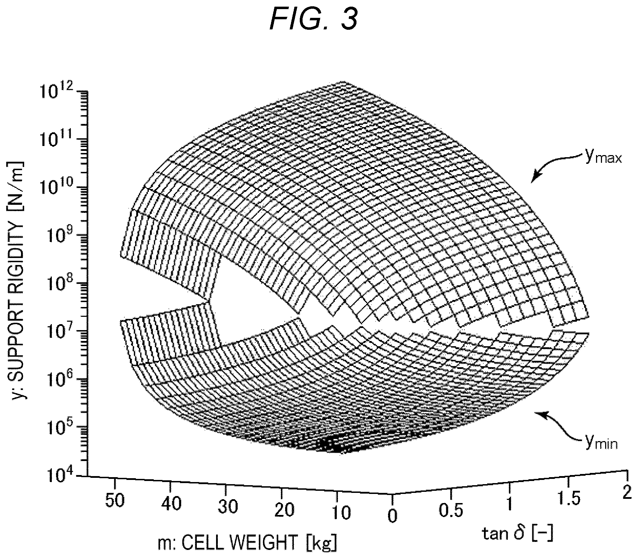

FIG. 3 is a three-dimensional graph illustrating the range having the maximum value yₘₐₓ and the minimum value yₘᵢₙ of the support rigidity y with the mass m of the cell 22 of the battery module 10 in FIG. 2, the support rigidity y of the support portion 23, and the loss factor tan δ of the support portion 23.

In the graph of FIG. 3, the minimum value yₘᵢₙ and the maximum value yₘₐₓ described above fall in a range indicated by a substantially conical curved surface. When the cell mass m, the support rigidity y, and the loss factor tan δ are set to be positioned between the minimum value yₘᵢₙ and the maximum value yₘₐₓ described above, the plurality of cells 22 can resonate with respect to road noise (a vibration wave of about 100 Hz (100 Hz to 400 Hz)), which is vibration input to the vehicle body during travel of the vehicle, and can continuously damp the vibration.

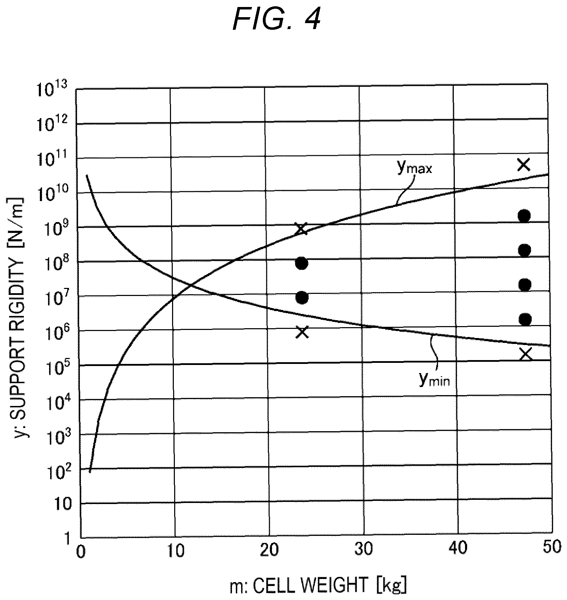

For example, when a graph of the cell mass m and the support rigidity y of the support portion illustrating ranges of the maximum value yₘₐₓ and the minimum value yₘᵢₙ in FIG. 4 in the case where the loss factor tan δ = 0.4 of the support portion in the graph of FIG. 2 is seen, it is understood that a combination (·) of the support rigidity y and the cell mass m included in the invention is distributed in a range surrounded by a curve of the minimum value yₘᵢₙ and a curve of the maximum value yₘₐₓ in FIG. 4. The combination (·) of the support rigidity y and the cell mass m is shown as a "dot" in FIG. 4. It is also understood that a combination (x) in the comparative example is distributed outside the range. The combination (x) of the support rigidity y and the cell mass m is shown as a "cross" in FIG. 4.

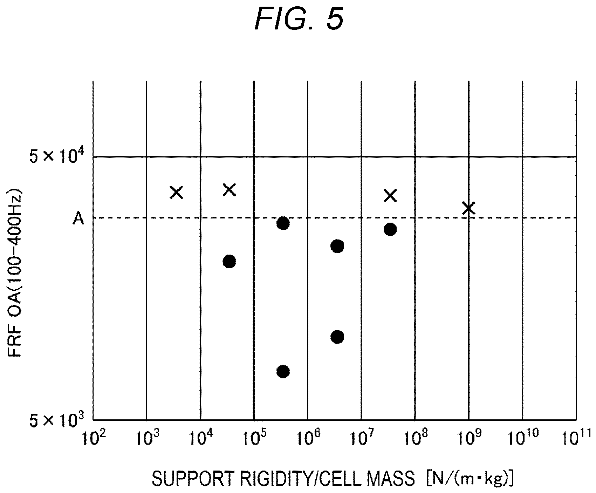

Furthermore, when a graph illustrating a relationship between the support rigidity/cell mass and a transfer function (FRF (Frequency Response Function) OA) at the road noise of 100 to 400 Hz in FIG. 5 is seen, it is understood that, in the combination (·) of the support rigidity y and the cell mass m included in the invention in FIG. 4, the transfer function is reduced to a lower level than a level of a transfer function A (e.g., 29380 mm/s²/N), with which an occupant of the vehicle can sense vibration damping, due to the vibration damping effect. Meanwhile, it is understood that, with the combination (x) in the comparative example, it is higher than the level of the transfer function A, and thus the vibration damping effect cannot be exerted. The transfer function may be a transfer function from the left front wheel 3 to the right rear wheel 7 or a transfer function from the right front wheel 3 to the left rear wheel 7.

Here, it has been confirmed by the inventors e.g., from a computer analysis that, in the case of the loss factor tan δ = 0.4 or greater and the cell mass m is 23 kg or greater, in a range where the support rigidity/cell mass [N/(m · kg)] is 3.0 x 10⁵ to 1.0 × 10⁷, the combination (·) of the support rigidity y and the cell mass m falls in a range surrounded by a curve of the minimum value yₘᵢₙ and a curve of the maximum value yₘₐₓ in FIG. 4, and thus the vibration damping effect is achieved. In addition, it has been confirmed by the inventors from e.g., the computer analysis that, in the case of the loss factor tan δ = 0.4 or greater and the cell mass m is 47 kg or greater, in a range where the support rigidity/cell mass [N/(m · kg)] is 1.0 × 10⁴ to 8.0 × 10⁷, the combination (·) of the support rigidity y and the cell mass m falls in a range surrounded by the curve of the minimum value yₘᵢₙ and the curve of the maximum value yₘₐₓ in FIG. 4, and thus the vibration damping effect is achieved.

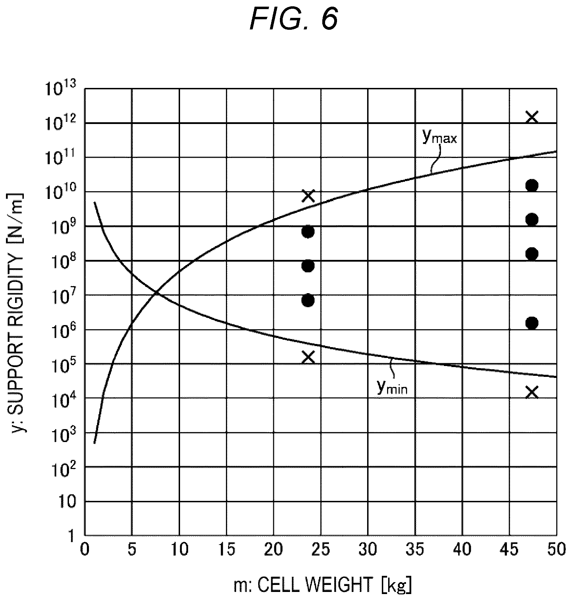

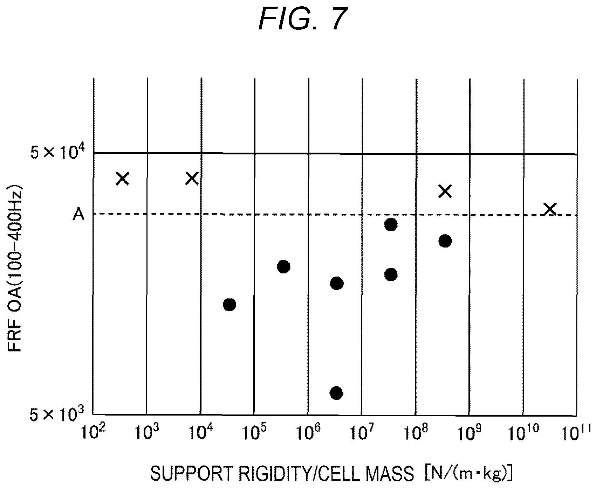

Similarly, when a graph in FIG. 6 (a graph of the cell mass m and the support rigidity y of the support portion illustrating a range of the maximum value yₘₐₓ and the minimum value yₘᵢₙ when the loss factor tan δ = 1.0 of the support portion in the graph in FIG. 2) and the graph in FIG. 7 (the graph illustrating the relationship between the support rigidity/cell mass and the transfer function (FRF OA)) are seen, it is also understood that, with the combination (·) of the support rigidity y and the cell mass m included in the invention of FIG. 6, the transfer function is reduced to the lower level than the level of the transfer function A, with which the occupant of the vehicle can sense the vibration damping, due to the vibration damping effect.

Here, it has been confirmed by the inventors e.g., from the computer analysis that, in the case of the loss factor tan δ = 1.0 or greater and the cell mass m is 12 kg or greater, in a range where the support rigidity/cell mass [N/(m · kg)] is 2.5 × 10⁵ to 1.0 × 10⁷, the combination (·) of the support rigidity y and the cell mass m falls in the range surrounded by the curve of the minimum value yₘᵢₙ and the curve of the maximum value yₘₐₓ in FIG. 6, and thus the vibration damping effect is achieved.

Furthermore, in regard to a case where the loss factor is low, it has been confirmed by the inventors from the computer analysis that, for example, in the case of the loss factor tan δ = 0.1 or greater and the cell mass m is 47 kg or greater, in a range where the support rigidity/cell mass [N/(m · kg)] is 4.0 × 10⁴ to 7.0 × 10⁶, the combination of the support rigidity y, the cell mass m, and the value x of the loss factor tan δ falls in the range surrounded by the curve of the minimum value yₘᵢₙ and the curve of the maximum value yₘₐₓ in FIG. 2, and thus the vibration damping effect is achieved.

In other words, the minimum value yₘᵢₙ and the maximum value yₘₐₓ of the support rigidity may be determined based on the support rigidity/cell mass at which the FRF OA is below the transfer function A, as shown in FIGS. 5 and 7.

From the above results, it is understood that the vehicle battery mounting structure in the present embodiment has the following operational effects.

During travel of the electric vehicle, the vibration wave input to the vehicle body 1 from the pair of left and right front wheels 3 is transmitted to each of the plural battery modules 10 fixed to the vehicle body 1. At the time, in each of the battery modules 10, the elastic wave is sequentially transmitted to the plurality of cells 22 aligned in the vehicle front-rear direction X via the support portions 23. In the above battery mounting structure, since the support rigidity y of the support portion satisfies the range of yₘᵢₙ ≤ y ≤ yₘₐₓ in the above condition, the plurality of cells 22 respectively resonate to interfere with the elastic wave and thereby reduce the elastic wave.

In other words, in a frequency band of the vibration input to the vehicle body 1 during the travel of the vehicle, dissipation and interference of vibration energy occur to the vibration that is sequentially transmitted for each of the cells 22 in series in the vehicle front-rear direction X. That is, it is possible to exert the vibration damping effect by so-called meta-damping (meta-resonance) for continuously damping the vibration along a transmission direction of the vibration by using the mass of the two or more cells 22 arranged in series and the loss factor or the damping characteristic of the support portion 23.

Just as described, the NVH performance of the vehicle can be improved by effectively blocking the vibration input from the front wheels 3 to the vehicle body 1 by using the plurality of cells 22 and the support portions 23 and thereby suppressing the transmission into the cabin. Thus, it is possible to suppress the vibration at the frequency in a road noise band that is input to the vehicle body 1 during the travel.

Here, in the case where the value of the loss factor tan δ of the support portion 23 is x=2, and where the minimum value yₘᵢₙ of the support rigidity y is yₘᵢₙ = 1.296 x 10⁹ (1/m)³, the maximum value yₘₐₓ of y is yₘₐₓ = 1.929 x 10³ m⁵, and ymin < ymax, it is preferable that y is set to a range of yₘᵢₙ ≤ y ≤ yₘₐₓ.

In this configuration, when the value of the loss factor tan δ of the support portion 23 is x=2, the range of the support rigidity y of the support portion 23, that is, the range between yₘᵢₙ and yₘₐₓ can be made the widest, and it is thus possible to suppress the vibration in the road noise band by selecting the support rigidity y from the wide range. As a result, a degree of freedom in design of the battery mounting structure is improved.

### (Description of Meta-Damping)

In order to effectively damp the vibration input from the front wheels 3 to the vehicle body 1 by a vibration model of a multi-mass point dispersion type including the plurality of cells 22 in the battery module 10 illustrated in FIGs. 1 to 2, the present inventors have intensely devised the support rigidity y of the support portion 23 and considered a configuration to generate the meta-damping (meta-resonance) in each of the battery modules 10.

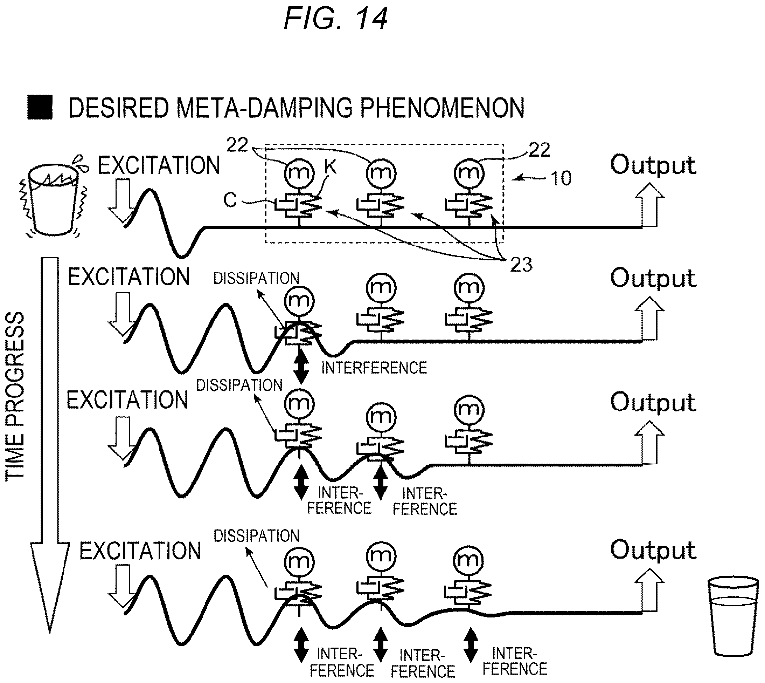

Here, as illustrated in FIG. 14, the meta-damping means to generate a plurality of resonances under a condition of the same excitation frequency in the vibration model of the multi-mass point dispersion type and to block the vibration transmitted to an output destination (that is, to generate a band gap).

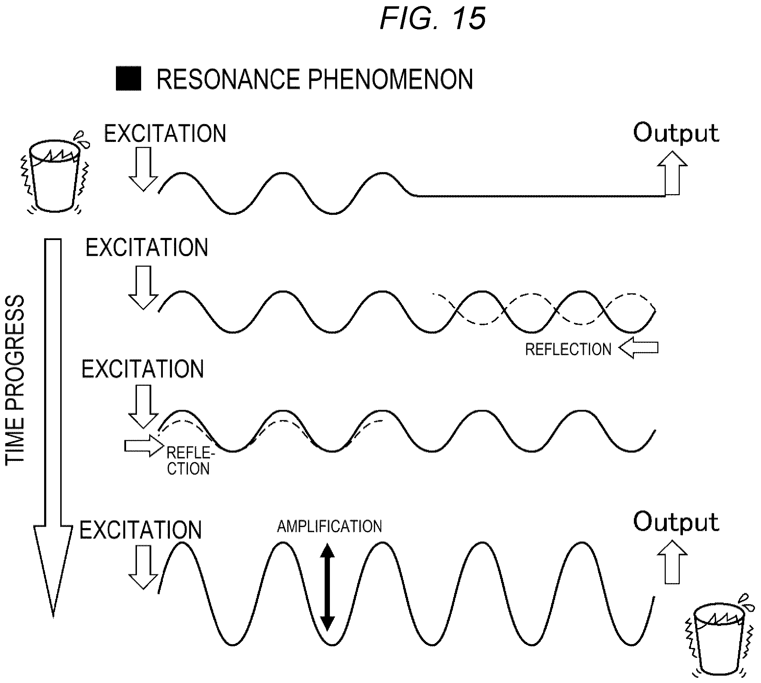

For example, as illustrated in FIG. 15, in the normal resonance phenomenon, when the vibration is continuously applied at the same frequency, an input wave resonates with a reflective wave from the output destination, and thus the vibration reaching the output destination is amplified.

However, in the meta-damping illustrated in FIG. 14, even when the plurality of cells 22 (having the mass M) and the plurality of support portions 23 (having a spring constant K and a damping rate C) that individually support them in each of the battery modules 10 vibrate continuously at the same frequency, the input wave interferes for each set of the cells 22 and the support portions 23, and the vibration energy is dissipated (that is, vibration damping), whereby the vibration to reach the output destination is blocked. That is, in the meta-damping, damping is caused by continuous interference so as not to cause amplification due to the resonance. When seen in the entire vehicle body 1 in FIG. 1, the vibration input from the front wheels 3 during the travel of the vehicle is transmitted to the eight battery modules 10 through the front suspension 4, the front lower arm 2, the front cross member 12, and the bottom wall. At this time, the plurality of cells 22 and the support portions 23 (see FIG. 2) supporting those in each of the battery modules 10 interfere with the vibration and dissipate the vibration energy, and the vibration is thereby gradually reduced in the vehicle rear direction X2.

The support rigidity y of the support portion 23 is set as described above in order to cause damping by the meta-damping described above in each of the battery modules 10.

The meta-damping realized by the battery mounting structure in the present embodiment as described above controls the vibration level by a resonance structure of a metamaterial (more specifically, a structure of the battery module 10 formed by the plurality of cells 22 and the plurality of support portions 23) in which a local resonance element and a damping element are combined. Accordingly, in a target frequency band (band gap), the vibration is not transmitted to the cabin (the vehicle interior) due to interaction by the resonance structure.

### (Description of Meta-Damping, Dynamic Vibration Absorber, and Damping)

Here, as a method for reducing the vibration, differences in meta-damping, the dynamic vibration absorber, and damping will be described.

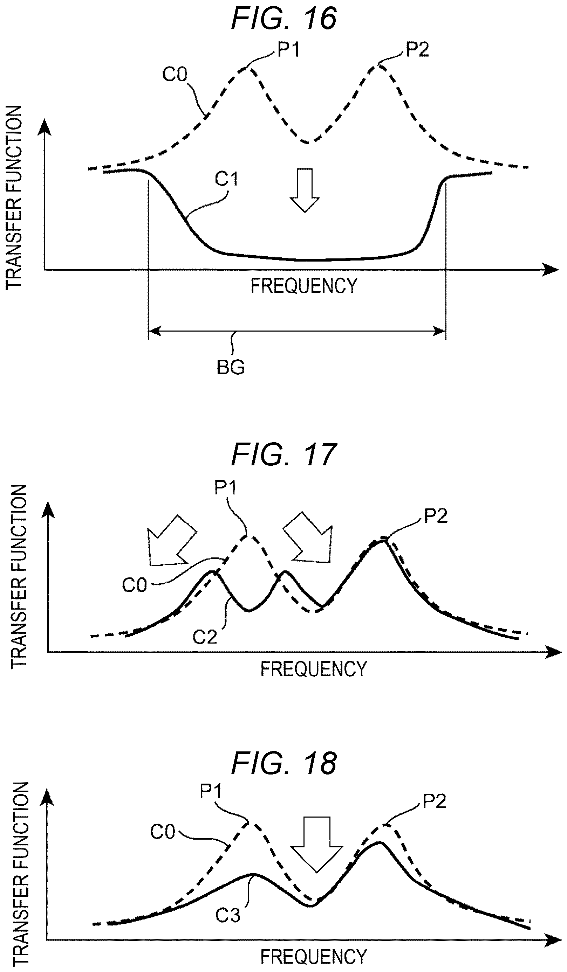

In the meta-damping, as indicated by a curve C1 of a graph in FIG. 16, an input elastic wave C0 is blocked and damped by interference caused by interaction between the input elastic wave C0 (the elastic wave having peaks P1, P2) and a meta-resonator (the vibration model of the multi-mass point dispersion type in FIG. 14 described above), and a band gap BG (that is, a frequency band in which the vibration is blocked and damped) is enlarged to form the wide BG connected to one.

In the dynamic vibration absorber, vibration of a main vibration system is damped by adding an auxiliary mass and transferring the energy to an auxiliary vibration system. More specifically, in the dynamic vibration absorber, as indicated by a curve C2 of a graph in FIG. 17, the vibration is damped by dividing the peak P1 as the large transfer function of the input elastic wave C0 into two small peaks. As a result, the wide band gap BG (see FIG. 16) such as meta-damping does not occur.

In damping, the energy generated by the vibration is dissipated into heat or fluid resistance by a damping material, and the vibration is thereby damped. More specifically, in damping, as indicated by a curve C3 of the graph in FIG. 18, the vibration is damped by lowering the peak P1 having the large transfer function of the input elastic wave C0. Therefore, the band gap BG such as meta-damping is not generated.

### (Modified Examples)

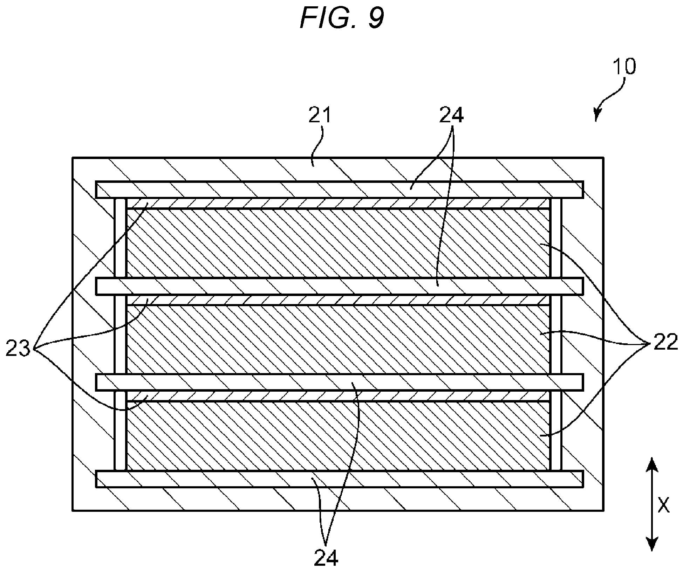

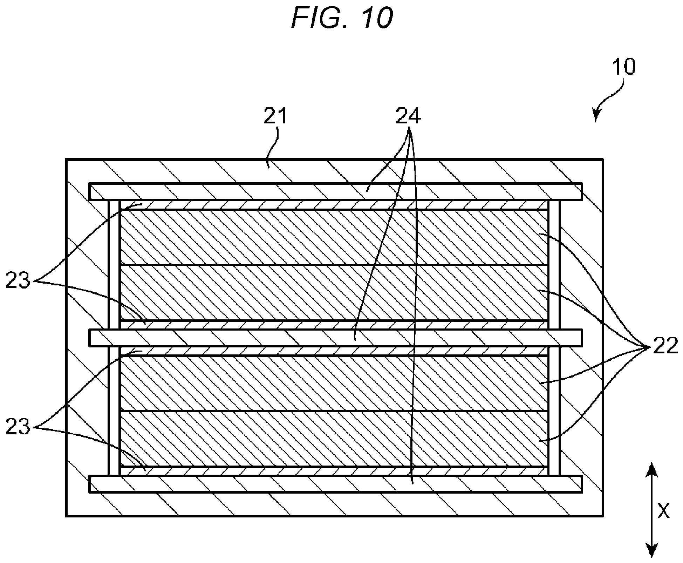

(A) In the above embodiment, as illustrated in FIGs. 2 and 8, the support portion 23 that is made of the polymer adhesive or the like adheres both front and rear surfaces of each of the cells 22 to the adjacent partition portion 24, but the invention is not limited thereto.
   The support portion 23 in the invention only needs to be disposed in the battery casing 21 and be able to support the cell 22. Thus, as a modified example of the invention, as illustrated in FIG. 9, the support portion 23 made of the polymer adhesive or the like may be bonded to one of the front and rear surfaces of the respective cell 22, for example, the partition portion 24 adjacent to the front surface.
(B) As another modified example of the invention, as illustrated in FIG. 10, in a configuration in which the two cells 22 that are adjacent to each other in the vehicle front-rear direction X are integrally coupled by welding, bolting, or the like, the two integrated cells 22 as one large cell may be bonded to the partition portion 24 adjacent to the front and rear surfaces thereof by the support portion 23. In such a configuration, the minimum value yₘᵢₙ and the maximum value yₘₐₓ of the support rigidity y may be calculated by using total mass of the two integrated cells 22 as the cell mass m.
(C) In the above embodiment, the cell in the plate shape or the pouch shape is described as an example of the cell 22. However, as the modified example of the invention, as illustrated in FIG. 11, a plurality of cylindrical cells 22 may be applied.

In the configuration illustrated in FIG. 11, a large number of the cylindrical cells 22 may be joined together by a joint portion 25 having higher rigidity than the support portion 23 and forms one large cell. The joint portion 25 may have higher rigidity than the support portion 23, for example, and an adhesive having higher rigidity than the support portion 23 made of the polymer adhesive, a fastening member such as a bolt, a metal braze for brazing, or the like is used as the joint portion 25.

In the configuration illustrated in FIG. 11, the plurality of cylindrical cells 22 joined to each other by the highly rigid joint portion 25 may be bonded to the partition portion 24 by the support portion 23. In this configuration, the support portion 23 collectively supports the plurality of cells 22 joined to each other by the highly rigid joint portion 25 having the higher rigidity than the support portion 23. In this way, it is possible to reliably exert the damping effect even when the large number of cells 22 is provided.

(D) As yet another modified example of the invention, as illustrated in FIG. 12, the support portion 23 may support the cell 22 in a state of being sandwiched between at least one of an upper surface 22a and a lower surface 22b of the cell 22, in FIG. 12, both surfaces and the top wall 21d or the bottom wall 21e of the battery casing 21. In FIG. 12, both upper and lower surfaces of the cell 22 are bonded to the battery casing 21 by the support portion 23 made of the polymer adhesive.

In the configuration illustrated in FIG. 12, the support portion 23 can stably support the cell in the state of being sandwiched between the cell 22 and each of the top wall 21d and the bottom wall 22e of the battery casing 21. As a result, the individual cells 22 can reliably be resonated with the elastic wave, and the stable vibration suppressing effect can be exerted.

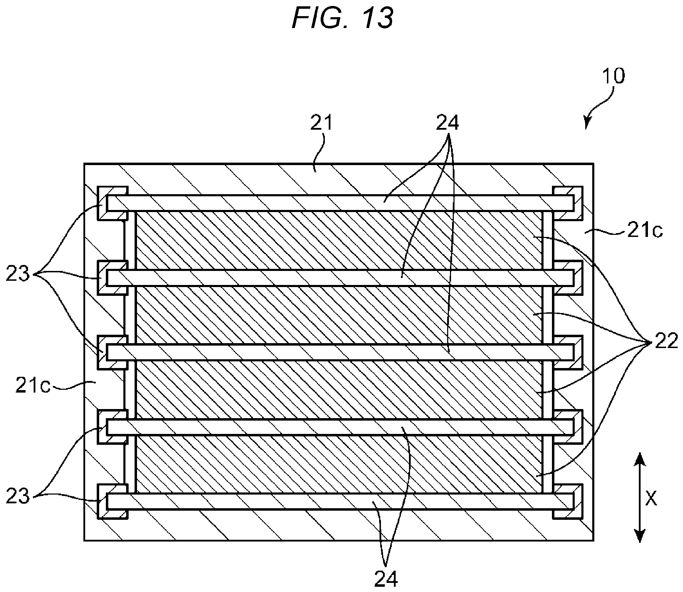

(E) As further another modified example of the invention, as illustrated in FIG. 13, the support portion 23 may support an integrated unit of the cell 22 and the partition portion 24 from both left and right ends.

In this configuration, the cell 22 and the partition portion 24 are coupled to be integrated by welding, adhesion, or the like. In a state of being sandwiched between each of left and right end portions of the partition portion 24 and the side wall 21c of the battery casing 21, the support portion 23 supports the integrated unit of the cell 22 and the partition portion 24 to enable the stable support. As a result, the individual cells 22 coupled to the partition portions 24 can reliably be resonated with the elastic wave, and the stable vibration suppressing effect can be exerted.

### [Reference Signs List]

1: vehicle body
3: front wheel
10: battery module
21: battery casing
22: cell
23: support portion
24: partition portion
25: joint portion

## Claims

1. A battery module (10) for a vehicle comprising:
a battery casing (21);
a plurality of cells (22) accommodated in the battery casing (21) and disposed in series in a predetermined direction (X); and
a support portion (23) disposed in the battery casing (21) and configured to support each of the plurality of cells (22), and
when support rigidity of the support portion (23) is y [N/m], mass of the cell (22) is m [kg], a value of tan δ as a loss factor of the support portion (23) is x, a minimum value yₘᵢₙ of y is yₘᵢₙ = 5.184 x 10⁹(1/x)²(1/m)³, a maximum value yₘₐₓ of y is yₘₐₓ = 482.2531 x²m⁵, and yₘᵢₙ < yₘₐₓ, y is in a range of yₘᵢₙ ≤ y ≤ yₘₐₓ.

2. The battery module (10) according to claim 1, further comprising a partition portion (24) disposed between the adjacent cells (22) and supported by the battery casing (21).

3. The battery module (10) according to claim 1 or 2, wherein
in the case where the value of tan δ is x=2, and where the minimum value yₘᵢₙ of y is yₘᵢₙ = 1.296 x 10⁹(1/m)³, the maximum value yₘₐₓ of y is yₘₐₓ = 1.929 x 10³m⁵, and yₘᵢₙ < yₘₐₓ, y is in a range of yₘᵢₙ ≤ y ≤ ymax.

4. The battery module (10) according to any one of the preceding claims, wherein
the support portion (23) is configured to collectively support the plurality of cells (22) joined to each other by a joint portion (25).

5. The battery module (10) according to claim **4,** wherein
rigidity of the joint portion (25) is higher than rigidity of the support portion (23).

6. The battery module (10) according to any one of the preceding claims, wherein
in a state of being sandwiched between the cell (22) and the partition portion (24), the support portion (23) is configured to support the cell (22).

7. The battery module (10) according to any one of the preceding claims, wherein
in a state of being sandwiched between at least one of an upper surface (22a) and a lower surface (22b) of the cell (22) and a top wall (21d) or a bottom wall (21e) of the battery casing (21), the support portion (23) is configured to support the cell (22).

8. The battery module (10) according to any one of the preceding claims, wherein
the cell (22) and the partition portion (24) are integrally coupled.

9. The battery module (10) according to any one of the preceding claims, wherein
in a state of being sandwiched between each of left and right end portions of the partition portion (24) and a side wall (21c) of the battery casing (21), the support portion (23) is configured to support the cell (22) and the partition portion (24).

10. The battery module (10) according to any one of the preceding claims, wherein
the predetermined direction (x) is a vehicle front-rear direction.

11. The battery module (10) according to any one of the preceding claims, wherein
the support portion (23) is made of a polymer adhesive.

12. A battery mounting structure for a vehicle comprising:
a vehicle body (1);
at least one battery module (10) according to any one of the preceding claims, wherein the battery module (10) is fixed to the vehicle body (1); and
a pair of left and right front wheels (3) rotatably attached to both left and right sides of a front portion of the vehicle body (1).

13. A vehicle comprising the battery module (10) according to any one of claims 1 to 11 and/or the battery mounting structure according to claim 12.

14. The vehicle according to claim 13, wherein the vehicle is an electric vehicle.
